# EUROPEAN PATENT SPECIFICATION

(11) **EP 3 415 695 B1**
(45) Date of publication and mention of the grant of the patent: **27.07.2022**
(21) Application number: 18177224.5
(22) Date of filing: 12.06.2018
(51) Int. Cl.: F16K 33/00, E03B 3/02

(54) **FLOAT VALVE**
SCHWIMMER-VENTIL
VALVE À FLOTTEUR

(30) Priority: 14.06.2017 NZ 17732860
(43) Date of publication of application: 19.12.2018
(73) Proprietor: Hansen Developments Limited, Whangarei 0110 (NZ)
(72) Inventor: TROLLIP, Christopher John, Hikurangi 0182 (NZ)
(74) Representative: Haseltine Lake Kempner LLP

(56) References cited:
- AU-A1- 2012 203 015
- CH-A5- 657 887
- FR-A- 1 259 964
- GB-A- 1 117 426
- GB-A- 2 280 033
- US-A- 2 524 699
- US-A- 3 197 914
- US-A- 3 241 262
- US-A- 3 800 461

## Description

### FIELD OF THE INVENTION

The invention relates to a float valve for use in a reservoir for maintaining a minimum fluid level within the reservoir.

### BACKGROUND OF THE INVENTION

Floats of various types are known and used in applications where a water level needs to be maintained with a float valve, such as in water troughs and water tanks. A typical float is supported by the water within the trough/tank and coupled to an end of a pivoting pilot arm of the valve. As the water level drops, the float and arm are no longer supported by the water, which causes the pilot arm to pivot down and open the valve. As the water level rises the float causes the pilot arm to pivot in an opposite direction to close the valve.

Some float valves operate to maintain the water level within a trough/tank between a minimum and a maximum level.

GB 2280033 describes a valve actuating apparatus that is dependent on fluid level.

It is an object of the present invention to provide an improved float valve with regard to adjustability.

### SUMMARY OF THE INVENTION

The present invention consists of a float valve for maintaining a fluid level within a reservoir above a minimum level, the float valve further comprising:
an actuating arm pivotable between a first pivotal position to open the valve when the minimum fluid level is reached, and a second pivotal positon to close the valve,
a weighted element of negative buoyancy,
a line coupleable to the actuating arm and to the weighted element, and
a float comprising a hollow body having a longitudinal axis and a transverse axis, wherein the float is asymmetric along its transverse axis, has a greater volume at or towards one end of its longitudinal axis and a smaller volume at or towards the other end of its longitudinal axis, and means along the length of the float for attaching the float to a line, the float attachable to the line, between the actuating arm and the weighted element to cause the arm to pivot to the first pivotal position and open the valve when the minimum fluid level is reached and the float is no longer fully supported by the fluid within the reservoir. Also, the float is slidably attachable to the line such that the float is slidable on the line as the fluid level changes, and the float is attachable to the line in either a first orientation in which said greater volume is closer to the actuating arm than said smaller volume, or a second orientation in which said smaller volume is closer to the actuating arm than said greater volume.

The term "reservoir" as used in this specification means a receptacle or chamber for holding a liquid, whether for supply to an external system or not, and is intended to include within its definition troughs, tanks, containers and other storage/supply receptacles or reserves.

The term "comprising" as used in this specification means "consisting at least in part of". When interpreting each statement in this specification that includes the term "comprising", features other than that or those prefaced by the term may also be present. Related terms such as "comprise" and "comprises" are to be interpreted in the same manner.

### BRIEF DESCRIPTION OF THE DRAWINGS

Preferred embodiments of the invention will be described by way of example only and with reference to the drawings, in which:
Figure 1 is a partly cross-section schematic view showing a typical installation of a float valve (in an open position), a float in a first orientation and a weighted element in a reservoir.
Figure 2 is a partly cross-section schematic view similar to figure 1 showing a typical installation of a float valve (in an open position), a float in a second orientation and a weighted element in a reservoir.
Figure 3 is a perspective view of the float valve, the float in a first orientation and weighted element.
Figure 4 is a perspective view of the float valve, the float in a second orientation and weighted element.
Figure 5 is a perspective view of the float.
Figure 6 is a front view of the float.
Figure 7 is a side view of the float.
Figure 8 is a top view of the float.
Figure 9 is a partly cross-section schematic view showing a typical installation of a float valve (in a closed position), a float in a first orientation and a weighted element in a reservoir.
Figure 10 is a partly cross-section schematic view showing a typical installation of a float valve (in a closed position), a float in a second orientation and a weighted element in a reservoir.

### DETAILED DESCRIPTION

A float valve is used where a liquid level needs to be maintained, such as in a water trough or reservoir or similar, and comprises a valve which controls water inflow and a float supported by the water within the trough/reservoir, and coupled to an end of a pivoting float arm of the valve. As the water level drops and the float falls, below a predetermined extent, the valve is opened to allow new water to flow into the reservoir, causing the water level and thus float to rise again, until when the reservoir is refilled above a predetermined extent and the valve is closed by the float arm.

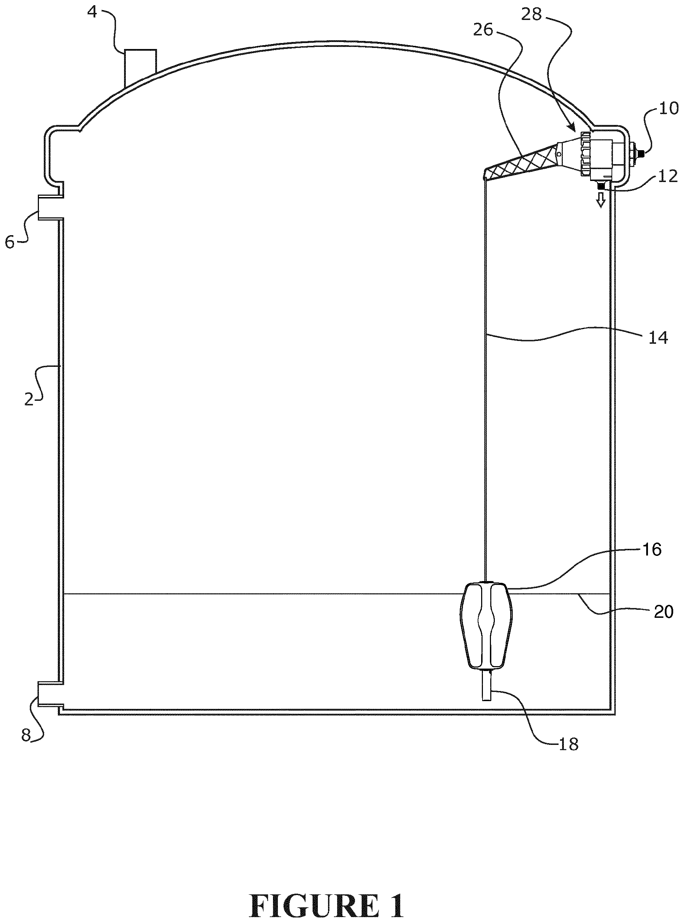

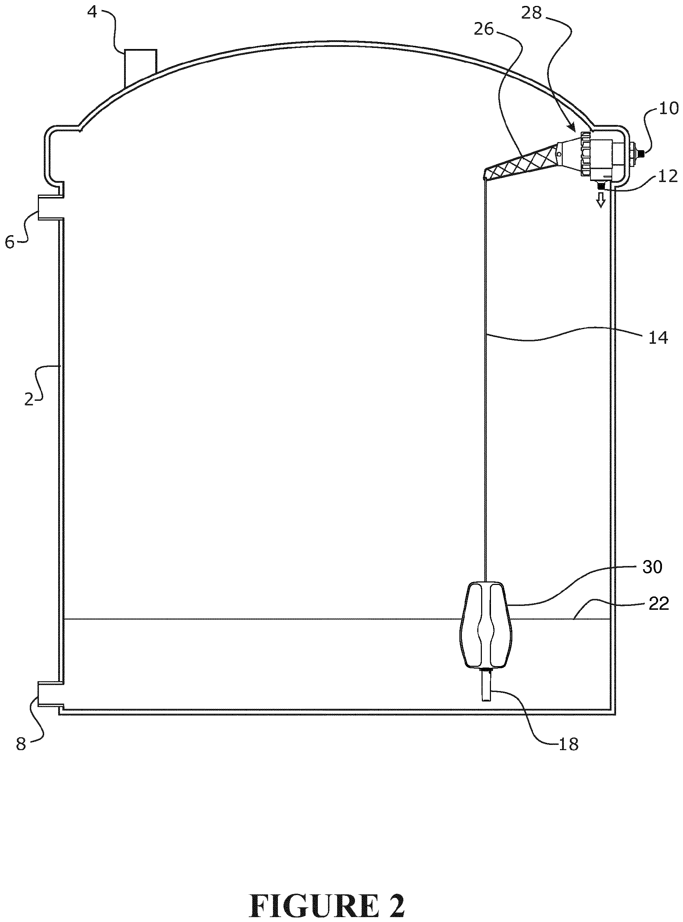

A float valve can be used to control a mains water supply, or as a backup supply, to a rain water reservoir. Referring to Figures 1 and 2, under normal conditions, rainwater will primarily fill the reservoir, through the rain inlet 4 at the top of the reservoir. Water will be removed from the reservoir for use generally through a lower outlet 8 to a house or other building premises. If an excess of rainwater enters the reservoir, the excess water will exit the reservoir via the overflow 6. If there is a period of time when insufficient rainfall occurs, then there is a potential for the water level in the reservoir to drop below the level of the outlet 8, which can also cause damage to water pumps, and cause issues with cleanliness of the water supply from the reservoir. For this reason it is common to have a backup system which can draw water from a mains water supply in order to prevent the water level from dropping below the level of the outlet 8. Typically this system does not fill the reservoir entirely, as for example rainfall could occur soon after the mains water has refilled the reservoir, which would waste said mains water. Thus the system is designed so as to keep the water level above the level of the outlet 8 but not to fill the reservoir further.

As seen in Figures 1, 2, 9 and 10, a float 16, 30 is coupled to a float arm 26 for ensuring that a float valve 28 is closed when the water level within the reservoir is not at a predetermined minimum level, for example at water level 34 the float valve is closed. The float 16, 30 is positively buoyant. Preferably, the float 16, 30 is weighted to have only residual positive buoyancy. The residual positive buoyancy of the float is preferably about 25%. If the inherent buoyancy of the float is greater, the residual positive buoyancy of the float can be attained by adding at least one float weighting element or elements that are located inside the generally hollow float 16, 30.

A weighted element 18 is also coupled to the float arm 26 for ensuring the float valve 28 is opened when water level within the reservoir drops below a minimum. The weighted element 18 is preferably coupled to an end of the float arm 26 via a non-rigid line such as a string or braided cord 14. The line may be rigid in alternative embodiments but it is preferably flexible. Weighted element 18 is slightly less than neutrally buoyant to remain submerged when the water level is above the minimum but not to an extent in which the element acts on the float arm 26 with enough force to pivot the arm.

The float 16, 30 preferably has an aperture running the length of its longitudinal axis, such that the line 14 runs through the aperture. The aperture is preferably of a diameter that is larger than the diameter of the line 14 so that the float 16, 30 can slide up and down the line 14. Alternatively, the line may be coupled to the float by for example by having one or more rings, stirrups or hoops on the exterior of the float through which the line 14 passes through. Alternatively the aperture through the float may not be in line with the longitudinal axis but may instead be offset from this axis.

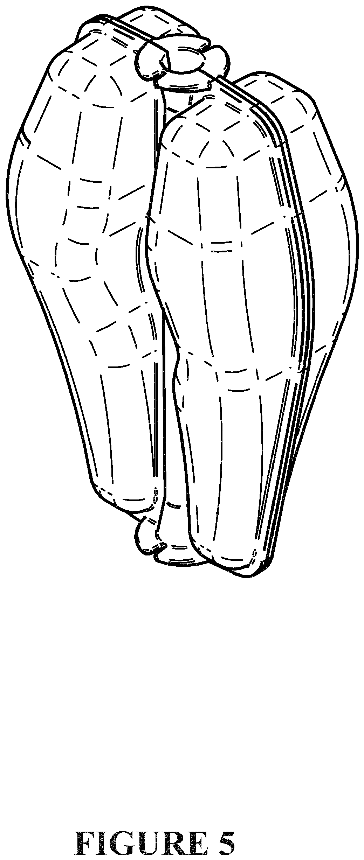

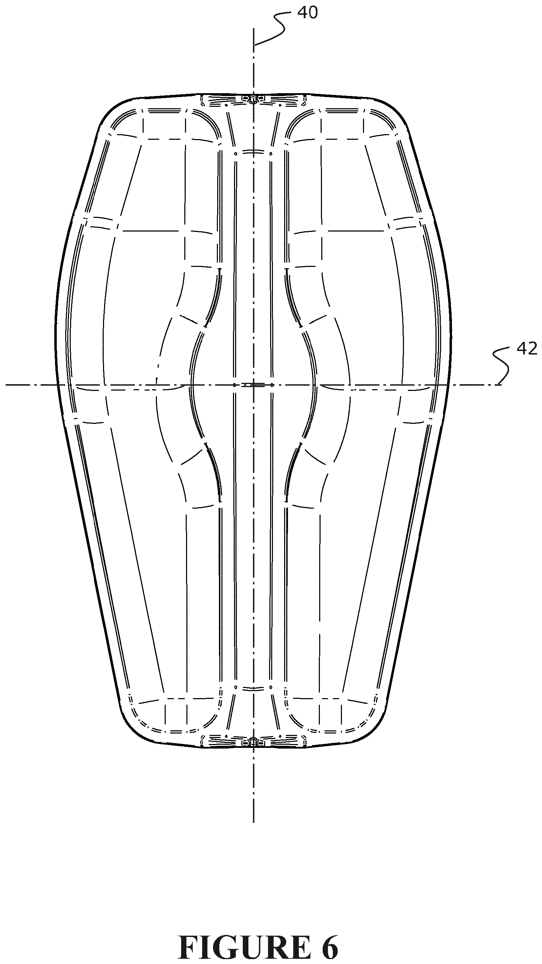

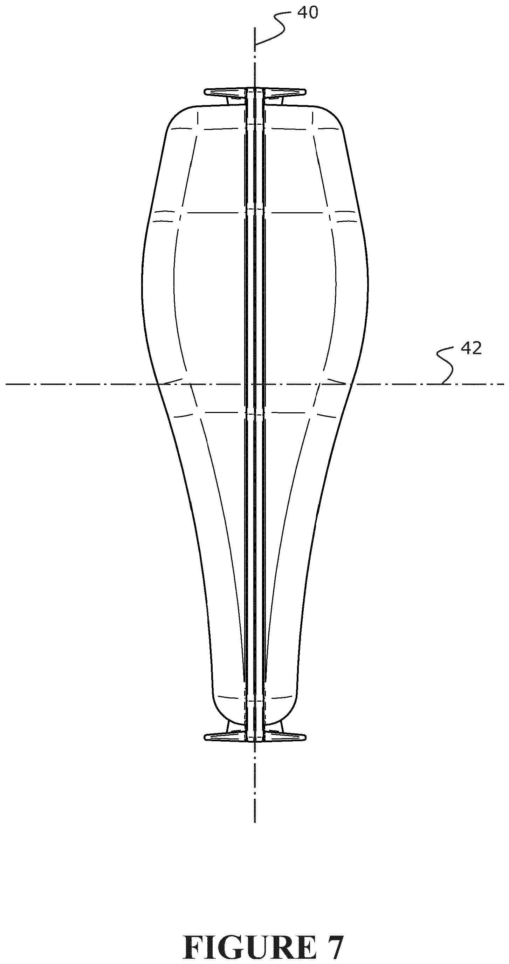

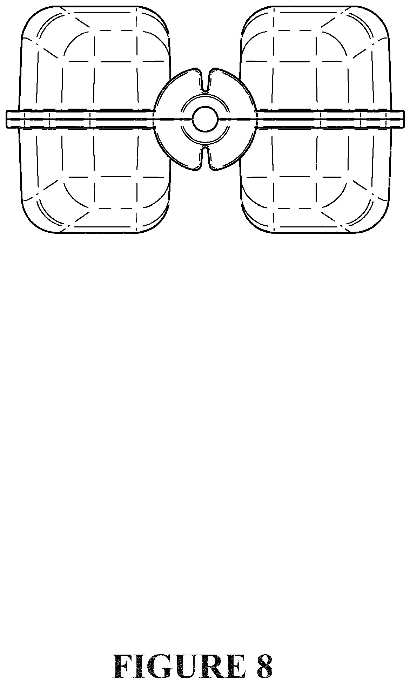

Figures 5, 6, 7 and 8 show different views of a preferred form of the float. The float is formed as a hollow plastic body having a longitudinal axis 40 and a transverse axis 42. The float has a varying width along the longitudinal axis such that it is asymmetric along its transverse axis and symmetric along its longitudinal axis. The float has a greater volume at or towards one end of its longitudinal axis than at or towards the other end of its longitudinal axis, and comprises two separate volumes extending length-wise of the float. This enables the float to be attached to the line in two alternative orientations.

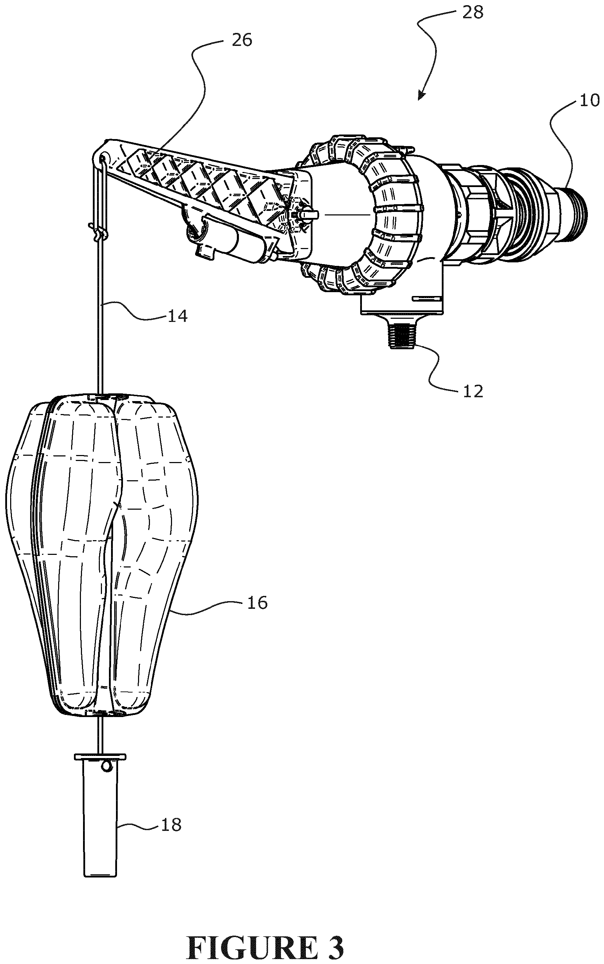

In a first orientation, as shown in Figure 3, the portion of the float with the greater volume is positioned uppermost, such that it is closer to the end of the line 14 which connects to the float arm 26, while the portion of the float with the smaller volume is closer to the end of the line 14 that connects to the weighted element 18. The centre of buoyancy of the float 16 in this first orientation is thus towards the top of the hollow body.

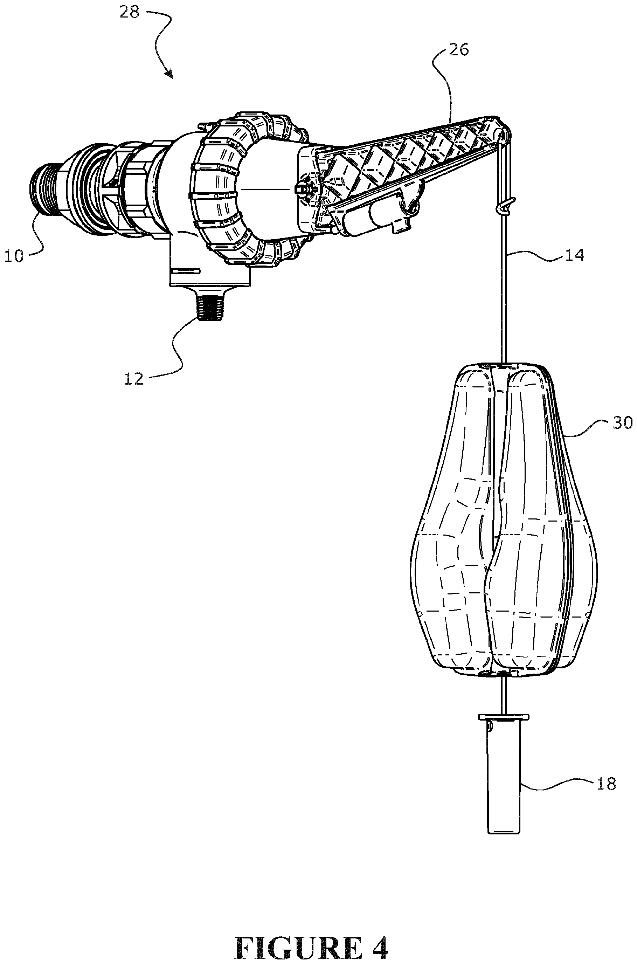

The orientation of the float 16 can be changed to a second orientation, shown in Figure 4. This modifies the water level at which the float 16 no longer is supported by the water, and at which the valve 28 opens. In the second orientation, as shown in Figure 4, the portion of the float with the greater volume positioned lowermost, such that it is closer to the end of the line 14 which connects to the weighted element 18, while the portion of the float with the smaller volume is closer to the end of the line 14 that connects to the float arm 26. This alters the centre of buoyancy of the float 30 in the second orientation to be towards the bottom of the hollow body.

The second orientation can be achieved by removing either the weighted element 18 from the line 14, or by removing the line 14 from the float arm 26. The float is then removed from the line 14 and turned 180 degrees and reattached to the line 14, which is reattached to whichever of the weighted element 18 or the float arm 26 it was removed from. The two orientations of the float can be seen in Figures 3 and 4.

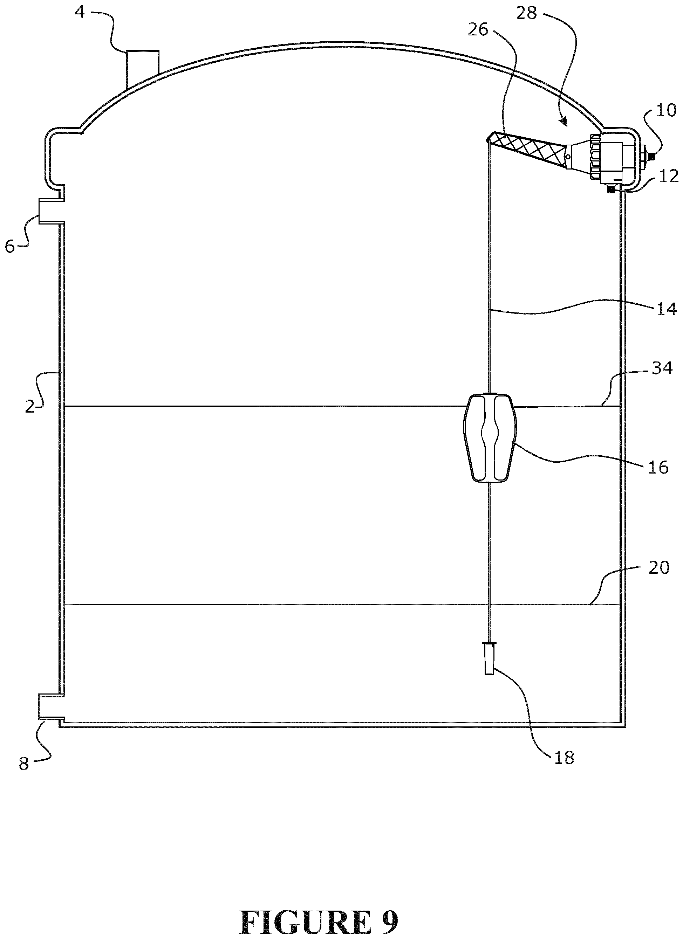

Figures 1 and 9 show the float 16 in a first orientation where the portion of the float 16 having a greater volume is positioned closer to the float arm than the portion having a lower volume. During operation, when the water level within the reservoir drops to a minimum level 20 shown in Figure 1, the float is no longer fully supported by the water. The bottom of the float 16 contacts the weighted element 18, causing both to move downwards. The weight of both the float 16 and the weighted element 18 pulls down on the end of the float arm 26 to thereby pivot the float arm 26 to the second pivotal position shown in Figure 1 to open the valve 28, allowing water to flow from the mains water inlet 10 into the valve and out of outlet port 12 into the reservoir. As water flows from outlet port 12 into the reservoir, the water level within the reservoir rises. As the water level begins to rise, the float 16 becomes supported by the water once again and rises with the water. As the float 16 rises it disassociates from the weighted element 18, which also rises to a point at which the weight of the float 16 is no longer carried by the float arm 26, allowing the float arm 26 to pivot the arm back to the first pivotal position shown in Figure 9, at which point the valve 12 is closed.

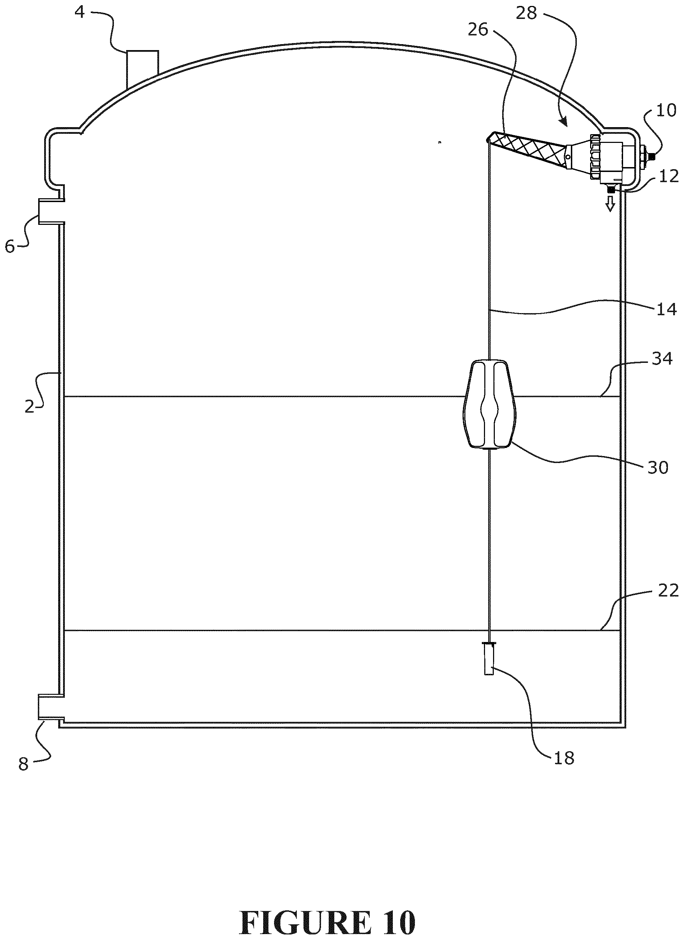

Similarly referring now to Figures 2 and 10, during operation, the float 30 may alternatively be positioned in the second orientation, where the portion of the float 30 having a lower volume is positioned closer to the float arm than the portion having a greater volume. When the water level within the reservoir drops to a minimum level 22 shown in Figure 2, this causes the float to no longer be fully supported by the water. Due to the asymmetric nature of the float as defined above, the minimum water level 22 of the reservoir with the float 30 in this orientation is lower than that when using the float in the first orientation. This allows for different depth reservoirs to be accommodated for, as well as variations in the depth of the placement of the outlet 8. It also allows the depth of the water in the reservoir to which the valve fills to be changed depending on the orientation of the float. For example with the float in the second orientation the valve 12 will preferably deposit less water from the mains in to the reservoir than when the float is in the first orientation. In the second orientation of the float 30, the system functions the same as in the first orientation of the float 16. The bottom of the float 30 contacts the weighted element 18, causing both to move downwards. The weight of both the float 30 and the weighted element 18 acts to pull down the float arm 26 to thereby pivot the float arm 26 to the second pivotal position shown in Figure 2 causing the valve 28 to open. As water flows from outlet port 12 into the reservoir, the water level within the reservoir rises, until when the float 30 becomes supported by the water once again and rises, it reaches a point where it separates from the weighted element 18, allowing the float arm 26 to pivot back to the first pivotal position shown in Figure 10, closing the valve 12.

The length of the line 14 can be varied to accommodate for different depth reservoirs. As previously discussed, the float 16 preferably has an aperture through the length of the float. This aperture is preferably through its centre and along its longitudinal axis. The line 14 preferably passes through this aperture in the float 16 and attaches to the weighted element 18. This allows the float 16 to slide up and down the line 14 as the water level in the reservoir 2 changes, while the weighted element 18 stays in place. The length of the line 14 in conjunction with the orientation of the float 16 determines the level at which the float 16 will no longer be supported by the water (minimum level 20) for the valve 28 to open. The level at which the float 16 becomes supported by the water is determined by the orientation of the float on the line and thus the depth at which displacement of the float exceeds the mass of the float. Thus the longitudinally offset volumes give two effective levels.

The float may be formed from a plastic material. Preferably the float is formed by injection moulding plastic material. The float could also be formed by two injection moulded plastic components welded together. Preferably the float also comprises at least one weighting element contained within. Alternatively the float may be formed by blow moulding of plastics material, or by metal casting for larger versions if desired.

The foregoing description of the invention includes preferred forms thereof. Modifications may be made thereto without departing from the scope of the invention as defined by the accompanying claims.

## Claims

1. A float valve (28) for maintaining a fluid level within a reservoir above a minimum level, the float valve further comprising:
an actuating arm (26) pivotable between a first pivotal position to open the valve when the minimum fluid level is reached, and a second pivotal position to close the valve,
a weighted element (18) of negative buoyancy,
a line (14) coupleable to the actuating arm and to the weighted element (18), and
a float (16,30) comprising a hollow body having a longitudinal axis (40) and a transverse axis (42), wherein the float is asymmetric along its transverse axis, has a greater volume at or towards one end of its longitudinal axis and a smaller volume towards the other end of its longitudinal axis, and means along the length of the float for attaching the float to a line, the float (16,30) attachable to the line between the actuating arm (26) and the weighted element (18) to cause the arm (26) to pivot to the first pivotal position and open the valve when the minimum fluid level is reached and the float (16,30) is no longer fully supported by the fluid within the reservoir
**characterised in that** the float (16,30) is slidably attachable to the line (14) such that the float is slidable on the line as the fluid level changes, and wherein the float is attachable to the line in either a first orientation in which said greater volume is closer to the actuating arm than said smaller volume, or a second orientation in which said smaller volume is closer to the actuating arm than said greater volume.

2. The float valve as claimed in claim 1 wherein the line is non-rigid.

3. The float valve as claimed in any one of claims 1 or 2 wherein the float is moveable between the first orientation and second orientation by removing it from the line, rotating it 180° about the transverse axis and reattaching it to the line.

4. The float valve as claimed in any one of claims 1 to 3 wherein the float has at least one float weighting element.

5. The float valve as claimed in claim 4 wherein the at least one float weighting element is disposed within the hollow body of the float.

6. The float valve as claimed in any one of claims 1 to 5, wherein the means along the length of the float for attaching the float to a line comprises an aperture through the float and along the length of the float.

7. The float valve as claimed in claim 6, wherein the aperture is aligned with a longitudinal axis of the float.

## Patentansprüche

1. Schwimmerventil (28) zum Aufrechterhalten eines Flüssigkeitspegels in einem Reservoir über einem Mindestpegel, wobei das Schwimmerventil ferner umfasst:
einen Betätigungsarm (26), der zwischen einer ersten Schwenkstellung zum Öffnen des Ventils bei Erreichen des Mindestflüssigkeitspegels und einer zweiten Schwenkstellung zum Schließen des Ventils schwenkbar ist,
ein beschwertes Element (18) mit negativem Auftrieb,
eine Schnur (14), die mit dem Betätigungsarm und dem beschwerten Element (18) gekoppelt werden kann, und
einen Schwimmer (16, 30), umfassend einen Hohlkörper mit einer Längsachse (40) und einer Querachse (42), wobei der Schwimmer entlang seiner Querachse asymmetrisch ist, ein größeres Volumen an oder in Richtung eines Endes seiner Längsachse und ein kleineres Volumen in Richtung des anderen Endes seiner Längsachse aufweist, und Mittel entlang der Länge des Schwimmers zum Befestigen des Schwimmers an einer Schnur, wobei der Schwimmer (16, 30) an der Schnur zwischen dem Betätigungsarm (26) und dem beschwerten Element (18) befestigt werden kann, zum Bewirken, dass der Arm (26) in die erste Schwenkstellung schwenkt und das Ventil öffnet, wenn der Mindestflüssigkeitspegel erreicht ist und der Schwimmer (16, 30) nicht mehr vollständig von der Flüssigkeit innerhalb des Reservoirs getragen wird,
**dadurch gekennzeichnet, dass** der Schwimmer (16, 30) verschiebbar an der Schnur (14) befestigt werden kann, derart, dass der Schwimmer auf der Schnur verschiebbar ist, wenn sich der Flüssigkeitspegel ändert, und wobei der Schwimmer an der Schnur entweder in einer ersten Ausrichtung, in der das größere Volumen näher am Betätigungsarm liegt als das kleinere Volumen, oder in einer zweiten Ausrichtung, in der das kleinere Volumen näher am Betätigungsarm liegt als das größere Volumen, befestigt werden kann.

2. Schwimmerventil nach Anspruch 1, wobei die Schnur nicht starr ist.

3. Schwimmerventil nach einem der Ansprüche 1 oder 2, wobei der Schwimmer zwischen der ersten Ausrichtung und der zweiten Ausrichtung bewegt werden kann, indem er von der Schnur abgenommen, um 180° um die Querachse gedreht und wieder an der Schnur befestigt wird.

4. Schwimmerventil nach einem der Ansprüche 1 bis 3, wobei der Schwimmer mindestens ein Schwimmerbeschwerungselement aufweist.

5. Schwimmerventil nach Anspruch 4, wobei das mindestens eine Schwimmerbeschwerungselement innerhalb des Hohlkörpers des Schwimmers eingerichtet ist.

6. Schwimmerventil nach einem der Ansprüche 1 bis 5, wobei das Mittel entlang der Länge des Schwimmers zum Befestigen des Schwimmers an einer Schnur eine Öffnung durch den Schwimmer und entlang der Länge des Schwimmers umfasst.

7. Schwimmerventil nach Anspruch 6, wobei die Öffnung mit einer Längsachse des Schwimmers fluchtet.

## Revendications

1. Vanne à flotteur (28) servant à maintenir un niveau de liquide à l'intérieur d'un réservoir au-dessus d'un niveau minimum, la vanne à flotteur comprenant en outre :
un bras d'actionnement (26) apte à pivoter entre une première position de pivotement pour ouvrir la vanne lorsque le niveau de liquide minimum est atteint, et une seconde position de pivotement pour fermer la vanne,
un élément lesté (18) présentant une flottabilité négative,
une ligne (14) pouvant être accouplée au bras d'actionnement et à l'élément lesté (18) et
un flotteur (16, 30) comprenant un corps creux ayant un axe longitudinal (40) et un axe transversal (42), le flotteur étant asymétrique le long de son axe transversal, présentant un volume plus grand au niveau ou à proximité d'une extrémité de son axe longitudinal et un volume plus petit à proximité de l'autre extrémité de son axe longitudinal, et un moyen le long de la longueur du flotteur pour attacher le flotteur à une ligne, le flotteur (16, 30) pouvant être attaché à la ligne entre le bras d'actionnement (26) et l'élément lesté (18) afin d'amener le bras (26) à pivoter jusqu'à la première position de pivotement et à ouvrir la vanne lorsque le niveau de liquide minimum est atteint et le flotteur (16, 30) n'est plus entièrement supporté par le liquide à l'intérieur du réservoir,
**caractérisée en ce que** le flotteur (16, 30) peut être attaché de manière coulissante à la ligne (14) de telle sorte que le flotteur soit apte à coulisser sur la ligne à mesure que le niveau de liquide change, et le flotteur pouvant être attaché à la ligne soit dans une première orientation, dans laquelle ledit volume plus grand est situé plus près du bras d'actionnement que ledit volume plus petit, soit dans une seconde orientation, dans laquelle ledit volume plus petit est situé plus près du bras d'actionnement que ledit volume plus grand.

2. Vanne à flotteur selon la revendication 1, dans laquelle la ligne est non rigide.

3. Vanne à flotteur selon l'une quelconque des revendications 1 et 2, dans laquelle le flotteur peut être déplacé entre la première orientation et la seconde orientation en l'enlevant de la ligne, en le tournant de 180° autour de l'axe transversal et en le rattachant à la ligne.

4. Vanne à flotteur selon l'une quelconque des revendications 1 à 3, dans laquelle le flotteur comporte au moins un élément de lestage de flotteur.

5. Vanne à flotteur selon la revendication 4, dans laquelle l'au moins un élément de lestage de flotteur est disposé à l'intérieur du corps creux du flotteur.

6. Vanne à flotteur selon l'une quelconque des revendications 1 à 5, dans laquelle le moyen le long de la longueur du flotteur pour attacher le flotteur à une ligne comprend une ouverture à travers le flotteur et le long de la longueur du flotteur.

7. Vanne à flotteur selon la revendication 6, dans laquelle l'ouverture est alignée avec un axe longitudinal du flotteur.
